Europäisches Patentamt

European Patent Office

Office européen des brevets

(19)

(11) Publication number: **0 186 446 B1**

# EUROPEAN PATENT SPECIFICATION

(12)

(45) Date of publication of patent specification: **15.05.91**  (51) Int. Cl.⁵: **C10G 11/05, B01J 29/06**

(21) Application number: **85309272.4**

(22) Date of filing: **19.12.85**

(54) Catalytic cracking with a mixture of faujasite-type zeolites and zeolite beta.

(30) Priority: **27.12.84 US 686762**
**12.09.85 US 775189**

(43) Date of publication of application:
**02.07.86 Bulletin 86/27**

(45) Publication of the grant of the patent:
**15.05.91 Bulletin 91/20**

(84) Designated Contracting States:
**BE DE FR GB IT NL**

(56) References cited:
**US-A- 3 894 934**
**US-A- 4 486 296**

**J. of Catalysis 67, 218-222 (1981)**

(73) Proprietor: **MOBIL OIL CORPORATION**
**150 East 42nd Street**
**New York New York 10017(US)**

(72) Inventor: **Chen, Nai Yuen**
**Forrest Central Drive**
**R.D. Titusvile, N.J. 08560(US)**
Inventor: **Ketkar, Anil Bhalchandra**
**192 Bull Run Road**
**Trenton, N.J. 08638(US)**
Inventor: **Nace, Donald Miller**
**4 Oak Road**
**Woodbury, N.J. 08096(US)**
Inventor: **Kam, Anthony Yuk-Yim**
**18 S. Birchwood Park Drive**
**Cherry Hill, N.J. 08003(US)**
Inventor: **Kennedy, Clinton Robert**
**2318 Lighthouse Lane**
**Wilmington Delaware 19810(US)**
Inventor: **Ware, Robert Adams**
**9F Hawthorne Woods-Narraticon**
**Deptford, N.J. 08096(US)**

(74) Representative: **Davy, John Raymond et al**
**CARPMAELS & RANSFORD 43, Bloomsbury**
**Square**
**London, WC1A 2RA(GB)**

**Description**

This invention relates to improvements in catalytic cracking of hydrocarbon of hydrocarbon oils to produce higher gasoline and distillate yields, increase gasoline octane number and reduce the product pour point of the distillates.

Catalytic cracking of hydrocarbon oils using crystalline zeolites is well known and is usually practised in fluid-bed catalytic cracking (FCC) units or moving bed (thermofor) catalytic cracking (TCC) reactors.

It is also known that improved results will be obtained in catalytic cracking if a crystalline zeolite having a pore size of less than 7 Angstrom units is used together with a crystalline zeolite having a pore size greater than 8 Angstrom units, as disclosed in US-A-3,769,202, although possibly at the expense of overall yield of gasoline.

Improved results in catalytic cracking with respect to both octane number and overall yield have been reported in US-A-3,758,403, using a cracking catalyst comprising a zeolite of pore size greater than 7 Angstrom units together with a ZSM-5 type zeolite, the ratio of ZSM-5 type zeolite to large pore size crystalline zeolite being in the range 1:10 to 3:1.

The use of zeolite ZSM-5 in cracking together with zeolite X or Y is described in US-A-3,894,931 and 3,894,933, in which the ZSM-5 constitutes about 5-10 wt. % of the mixture of zeolites. US-A-3,894,934 discloses a weight ratio of ZSM-5 to large pore zeolite of 1:10 to 3:1.

The addition of a separate additive or composite catalyst comprising a zeolite such as ZSM-5 has been found to be extremely efficient as an octane and total yield improver, when used in very small amounts, in conjunction with a conventional cracking catalyst. According to US-A-4,309,279 only 0.1 to 0.5 wt. % of a ZSM-5 type catalyst, added to a conventional cracking catalyst under conventional cracking operations, increased product unleaded research octane by about 1-3 units.

There has now been discovered an improved process which improves total yield and octane number of gasoline boiling range product, distillate quality and yield and produces a middle distillate liquid product of good pour point and cloud point, with increased gasoline plus distillate yield. This desirable result is obtained by the use of a cracking catalyst comprising zeolite beta and one or more faujasite-type zeolites. Zeolite beta is defined by the x-ray data presented in US-A-3,308,069, particularly Table 4 thereof. The faujasites are long known in the art, and forms of them employed in cracking include rare earth-exchanged zeolite X (REX) or Y (REY), ultrastable zeolite Y (USY) and the acid form of zeolite Y (HY).

According to the present invention a process for cracking a hydrocarbon feed comprises contacting said feed in the absence of added hydrogen with a catalyst comprising zeolite beta and a zeolite having the structure of faujasite. The weight ratio of faujasite to beta is from 1:25 to 20:1, advantageously from 1:4 to 5:1, 1:2 to 2:1 or 1:1. In one embodiment a beta/ faujasite weight ratio of 40:60 to 70:30 is favoured. Typically the faujasite is zeolite Y, which may be used in the form of rare earth-exchanged zeolite Y, ultrastable zeolite Y or the acid form of zeolite Y. The zeolite beta is advantageously employed in the acid or rare earth form, and may have a silica:alumina mole ratio of 10 to 500, preferably 50 to 250. It can for certain purposes possess an alpha value less than 100.

The catalyst may be in the form of particles which contain both zeolite beta and the faujasite, although in some applications it will be convenient to employ a mixture of particles of dissimilar zeolite content. Catalyst particles usually comprise a porous matrix in addition to their zeolite(s), such as alumina, silica and/or silica-alumina.

The process is conducted at a temperature of 449 to 566 ° C, a pressure of about 0 (1 bar) to about 100 psig (7.9 bar), and a LHSV of about 0.1 to about 20, and a commonly employed feed is a gas oil. Gas oils having an initial boiling point of at least 400 ° F (204.5 ° C) and an end point of at least 850 ° F (454.5 ° C), or up to 1000 ° F (538 ° C), are particularly contemplated. The cracking unit employed will in most cases be one which operates on the fluid-bed or moving-bed principle.

The hydrocarbon feedstock is heated with the catalyst composition under conversion conditions which are appropriate for cracking. External hydrogen is not added during the cracking process. The process according to the invention includes the elements of cracking and dewaxing. During conversion, the aromatics and naphthenes which are present in the feedstock undergo cracking reactions, such as dealkylation, isomerization and ring opening. Additionally, paraffins in the feedstock crack and/or isomerize to lower molecular weight species. The reduction in paraffin molecular weight results in a dewaxing effect. The dewaxing occurs together with the cracking during conversion and may occur simultaneously.

The process enables heavy feedstocks, such as gas oils boiling above 420 ° F (216 ° C), to be converted to gasoline range products boiling below 420 ° F (216 ° C) and distillates in the 420 ° -650 ° F (216 ° -343 ° range. Use of the catalyst composition of this invention results in improved cracking activity over the base catalyst, increased octane numbers of the product gasoline and increased gasoline plus alkylate yield

EP 0 186 446 B1

relative to faujasite-type zeolites alone. Further, the addition of zeolite beta to a faujasite-type base catalyst results in about the same distillate selectivity at high (70%) conversion, improved distillate quality and reduced pour and cloud points, compared to similar catalysts containing only faujasite-type zeolites.

Brief Description of the Drawings

Fig. 1 is a plot illustrating the gain in activity (% conversion) over a standard faujasite-type catalyst by the addition of zeolite beta;

Fig. 2 is a plot illustrating the relationship of octane number of $C_5$ + gasoline to activity (% conversion) in a catalyst with and without zeolite beta;

Fig. 3a is a plot illustrating the relationship of $C_5$ + gasoline yield to activity (% conversion) in a catalyst with and without zeolite beta;

Fig. 3b is a plot illustrating the relationship of total $C_4$'s yield to activity (% conversion) in a catalyst with and without zeolite beta;

Fig. 3c is a plot illustrating the relationship of butenes ($C_4$ = ) yield to activity (% conversion) in a catalyst with and without zeolite beta;

Fig. 3d is a plot illustrating the relationship of dry gas ($C_3$-) yield to activity (% conversion) in a catalyst with and without zeolite beta;

Fig. 3e is a plot illustrating the relationship of coke yield to activity (% conversion) in a catalyst with and without zeolite beta;

Fig. 4 is a plot illustrating the relationship of light fuel oil ($450^\circ$-$690^\circ$ F) ($232^\circ$-$366^\circ$ C) yield to activity (% conversion) of a catalyst with and without zeolite beta;

Figs. 5 and 6 are plots illustrating the effect of a catalyst of the present invention on pour point and cloud point, respectively, on a light fuel oil;

Fig. 7 is a plot illustrating the effect of a catalyst of the present invention on pour point of a vacuum distillate bottom oil;

Fig. 8 is a plot illustrating the relationship of $600^\circ F^+$ ($315\text{-}5^\circ C^+$) pour point to activity (% conversion) of catalysts containing varying amounts of zeolite beta;

Fig. 9 is a plot illustrating the cetane index versus % gas oil conversion achieved using a rare earth-exchanged zeolite Y, zeolite beta, and a mixture thereof; and

Figs. 10 and 11 are plots illustrating the effect of increasing amounts of zeolite beta in the catalyst of the present invention on gasoline yield and octane differentials, and on octane boost efficiency, respectively.

According to the invention zeolite beta is used in the at least partly hydrogen form in order to provide the desired acidity for the cracking reactions which are to take place. The acidity may be controlled by base exchange of the zeolite, especially with alkali metal cations, such as sodium, by steaming or by control of the silica-to-alumina ratio of the zeolite.

When synthesized in the alkali metal form, zeolite beta may be converted to the hydrogen form by ammonium ion-exchange and calcination of the ammonium form to yield the hydrogen form. In addition to the hydrogen form, other forms of the zeolite wherein the original alkali metal content has been reduced may be used. Thus, the original alkali metal of the zeolite may be replaced by ion-exchange with other suitable metal cations, including, by way of example, copper, zinc, calcium or rare earth metals.

For use in the present process zeolite beta preferably has a silica/alumina mole ratio in the range of 20:1 to 50:1 in the as-synthesized form. Zeolite beta can be prepared with silica-to-alumina mole ratios above the 200:1 maximum specified in US-A-3,308,069 and these forms of the zeolite perform well in the process: ratios of 50:1, 250:1, 500:1 or even higher may be used. The silica-to-alumina mole ratio of the zeolite in its assynthesized form may be increased by techniques such as steaming or dealuminization, and a certain measure of dealuminization can in any case take place during use under the influence of the hydrothermal conditions encountered during the catalytic cracking cycle.

The silica-to-alumina ratios referred to in this specification are the structural or framework ratios, that is, the ratio of the $SiO_4$ to the $AlO_4$ tetrahedra, which together constitute the structure of which the zeolite is composed. It should be understood that this ratio may vary from the silica-to-alumina ratio determined by various physical and chemical methods. For example, a gross chemical analysis may include aluminum which is present in the form of cations associated with the acidic sites on the zeolite, thereby giving a low silica-to-alumina ratio. Similarly, if the ratio is determined by the thermogravimetric analysis (TGA) of ammonia desorption, a low ammonia titration may be obtained if cationic aluminum prevents exchange of the ammonium ions onto the acidic sites. These disparities are particularly troublesome when certain treatments, such as the dealuminization method described below which result in the presence of ionic

3

aluminum free of the zeolite structure, are employed. Due care should therefore be taken to ensure that the framework silica-to-alumina ratio is correctly determined.

The silica-to-alumina ratio of the zeolite may be determined by the nature of the starting materials used in its preparation and their quantities relative one to another. Some variation in the ratio may therefore be obtained by changing the concentration of the silica precursor relative to that of the alumina precursor, but a limit to the maximum easily obtainable silica-to-alumina ratio of the product zeolite may be observed, usually in the vicinity of about 100:1. For ratios above this value, other methods are available for preparing the high silica zeolite, such as dealuminzation by extraction with acid. One such method comprises contacting the zeolite with an acid, preferably a mineral acid such as hydrochloric acid. The dealuminzation proceeds readily at ambient and mildly elevated temperatures and occurs with minimal losses in crystallinity to form high silica forms of zeolite beta with silica-to-alumina ratios of at least 100:1, with ratios of 200:1 or even higher being readily attainable.

The zeolite is conveniently used in the hydrogen form for the dealuminization process, although other cationic forms may also be employed, for example, the sodium form. If these other forms are used, sufficient acid should be employed to allow for the replacement by protons of the original cations in the zeolite. The amount of zeolite in the zeolite/acid mixture should generally be from 5 to 60 wt. %.

The acid may be a mineral acid, i.e., an inorganic acid or an organic acid. Typical inorganic acids which can be employed include mineral acids, such as hydrochloric, sulfuric, nitric and phosphoric acids, peroxydisulfonic acid, dithionic acid, sulfamic acid, peroxymonosulfuric acid, amidodisulfonic acid, nitrosulfonic acid, chlorosulfuric acid, pyrosulfuric acid, and nitrous acid. Representative organic acids which may be used include formic acid, trichloroacetic acid, and trifluoroacetic acid.

The concentration of added acid should be such as not to lower the pH of the reaction mixture to an undesirably low level, which could effect the crystallinity of the zeolite undergoing treatment. The acidity which the zeolite can tolerate will depend, at least in part, upon the silica-to-alumina ratio of the starting material. Generally, it has been found that zeolite beta can withstand concentrated acid without undue loss in crystallinity, but as a general guide, the acid will be from 0.1N to 4.0N, usually 1 to 2N. The values hold good regardless of the silica-to-alumina ratio of the zeolite beta starting material. Stronger acids tend to effect a relatively greater degree of aluminum removal than weaker acids.

The dealuminzation reaction proceeds readily at ambient temperatures, but mildly elevated temperatures may be employed, e.g., up to boiling. The duration of the extraction will affect the silica-to-alumina ratio of the product, since extraction, being diffusion controlled, is time dependent. However, because the zeolite becomes progressively more resistant to loss of crystallinity as the silica-to-alumina ratio increases, i.e., it becomes more stable as the aluminum is removed, higher temperatures and more concentrated acids may be used towards the end of the treatment than at the beginning without the attendant risk of losing crystallinity.

After the extraction treatment, the product is water-washed free of impurities, preferably with distilled water, until the effluent wash water has a pH within the approximate range of 5 to 8.

If desired, the zeolite may be steamed prior to acid extraction so as to increase the silica-to-alumina ratio and render the zeolite structure more stable to the acid. The steaming may also serve to increase the ease with which the alumina is removed and to promote the retention of crystallinity during the extraction procedure. Steaming in and of itself may be sufficient to increase the desired silica-to-alumina ratio.

Prior to use, the zeolite should be dehydrated at least partially. This can be done by heating to a temperature in the range of 400° to 1100°F (204° to 593°C) in air or an inert atmosphere, such as nitrogen, for 1 to 48 hours. Dehydration can also be performed at lower temperatures merely by using a vacuum, but a longer time is required to obtain a sufficient amount of dehydration.

The X or Y zeolites or other faujasite materials used according to the invention usually have the original cations associated therewith replaced by a wide variety of other cations according to techniques well known in the art, particularly rare earth. Typical replacing cations include hydrogen and/or metal cations, including Mg, Zn and Ca.

As noted above, a faujasite which may be used is USY. "Ultrastable" zeolites are well known in the art, are described in the literature and are exemplified in US-A-3,293,192 and 3,449,070.

It may be desirable to incorporate the zeolites into a material resistant to the temperature and other conditions employed in the process. Such matrix materials include synthetic and naturally occurring substances, such as inorganic materials, e.g., clay, silica and metal oxides. The latter may be either naturally occurring or in the form of gelatinous precipitates or gels, including mixtures of silica and metal oxides. Naturally occurring clays can be composited with the zeolites, including those of the montmorillonite and kaolin families. These clays can be used in the raw state as originally mined or initially subjected to calcination, acid treatment or chemical modification.

The zeolites may be composited with a porous matrix material, such as alumina, silica-alumina, silica-magnesia, silica-zirconia, silica-thoria, silica-berylia, silica-titania, as well as ternary compositions, such as silica-alumina-thoria, silica-alumina-zirconia, magnesia and silica-magnesia-zirconia. The matrix may be in the form of a cogel. The relative proportions of zeolite component and inorganic oxide gel matrix on an anhydrous basis may vary widely with the zeolite content ranging from 5 to 99, more usually 10 to 65, wt. % of the dry composite. The matrix itself may possess catalytic properties, generally of an acidic nature, and may be impregnated with a combustion promoter, such as platinum, to enhance a carbon monoxide combustion. In a moving bed process, the use of a composite catalyst is preferred; but in a fluid process, a mixture is satisfactory.

For some purposes, the weight ratio of faujasite to beta in the catalyst is important. For example, when the catalyst is used for cracking and dewaxing purposes, the weight ratio of faujasite to beta can range from 1:25 to 3:1, preferably 1:5 to 2:1, and still more preferably from 1:4 to 1:1. When the catalyst is used for cracking and improving the octane number of the gasoline product, the faujasite to beta ratio may range from 1:2 to 20:1, with a ratio of higher than 1:1 being preferably utilized.

The octane efficiency of the catalytic cracking process, that is, the octane gain relative to the yield loss, will vary according to a number of factors, including the nature of the feedstock, the conversion level and the relative proportions and activities of the catalysts. Added to this is the fact that the catalysts may age at different rates so that a process may drift from optimum values as it progresses, unless measures are taken to correct this, for example, by addition of fresh catalyst of one type or another. In an FCC process using the two zeolites on separate catalyst particles the differential aging effect can be readily compensated by adding make-up catalyst of one type or another, e.g., more zeolite beta, if this is found to age more quickly. In a moving bed process, however, which will generally use composite catalyst beads, i.e., catalyst particles containing both zeolites in each particle, this expedient cannot readily be employed. In such cases, it may be necessary to vary the feed or another variable of the process, such as temperature or severity. The octane efficiency may pass through a maximum value at certain values of the faujasite:beta ratio or of the activity ratio between the two catalysts. If this does occur, it will be possible to optimize either the content of the two zeolites in the catalyst as a whole, or their respective activities (or both), by altering the proportion of faujasite to beta so as to obtain the greatest octane improvement relative to the yield loss. In many cases, conventional faujasite cracking catalysts will give a maximum in the octane efficiency at zeolite loadings from about 60:40 to 30:70 (faujasite:beta) at the activity ratios conventionally encountered.

A particularly contemplated feedstock is a heavy hydrocarbon oil such as a gas oil, coker tower bottoms fraction reduced crude, vacuum tower bottoms, deasphalted vacuum resids, FCC tower bottoms or cycle oil. Oils derived from coal, shale or tar sands may also be used. Oils of this kind generally boil about $650°$ F ($343°$ C), although the invention is also useful with oils which have initial boiling points as low as $500°$ F ($260°$ C). These heavy oils contain high molecular weight long-chain paraffins and high molecular weight aromatics with a large proportion of fused ring aromatics. A heavy hydrocarbon oil feedstock will normally contain a substantial amount boiling above $450°$ F ($232°$ C) and will normally have an initial boiling point of about $550°$ F ($288°$ C), more usually about $650°$ F ($343°$ C). Typical boiling ranges will be about $650°$ to $1050°$ F ($566°$ C), or about $650°$ to $950°$ F ($510°$ C), but oils with a narrower boiling range may, of course, be processed; for example, those with a boiling range of about $650°$ to $850°$ F ($454°$ C). Heavy gas oils are often of this kind, as are cycle oils and other non-residual materials. It is possible to co-process materials boiling below $500°$ F ($260°$ C), but the degree of conversion will be lower for such components. Feedstocks containing lighter ends of this kind will normally have an initial boiling point above about $300°$ F ($149°$ C).

The present process is of particular utility with highly paraffinic feeds because, with feeds of this kind, the greatest improvement in pour point may be obtained. However, benefits will also be observed with non-waxy feeds.

The processing is carried out under conditions similar to those used for conventional catalytic cracking. Generally, temperatures of $840°$ to $1050°$ F ($449°$-$566°$ C) will be employed. The space velocity of the feedstock will normally be from 0.1 to 20 LHSV, preferably 0.1 to 10 LHSV.

The conversion may be conducted by contacting the feedstock with a fixed stationary bed of catalyst, a fixed fluidized bed or with a transport bed. The catalyst may be regenerated by burning in air or other oxygen-containing gas.

A preliminary hydrotreating step to remove nitrogen and sulfur and to saturate aromatics to naphthenes without substantial boiling range conversion will usually improve catalyst performance and permit lower temperatures, higher space velocities, or combinations of these conditions to be employed.

The invention is illustrated by the following Examples. All parts and proportions in these Examples are by weight unless stated to the contrary.

Example 1

This Example demonstrates the activity advantage of a separate-particle mixture of zeolite beta with REY over REY alone in a fixed bed reactor. Gippsland gas oil (properties listed in Table 1 following) was passed over equilibrium TCC bead catalysts mixed with varying quantities of the hydrogen form of zeolite beta contained in an Al₂O₃ binder.

## TABLE 1
### Gippsland Gas Oil Company

| | |
|---|---|
| Density g/cm³ | 0.859 |
| API Gravity | 33.8 |
| Pour Point, ° F | 105 (41° C) |
| Conradson Carbon, wt % | 0.13 |
| Kin. Viscosity at 100°C, cs | 3.0 |
| Aniline Point, F | 202.5 (94.,7°C) |
| Bromine Number | 1.7 |
| Refractive Index at 70°C | 1.4538 |
| Hydrogen, wt % | 13.67 |
| Sulfur, wt % | 0.15 |
| Nitrogen, ppm | 180 |
| Nickel, ppm | 0.14 |
| Vanadium, ppm | 0.10 |
| Iron, ppm | 2.0 |
| Copper, ppm | *0.1 |
| Molecular Weight | 313 |
| Paraffins, wt % | 62.9 |
| Mono Napthenes | 1.6 |
| Poly Napthenes | 10.7 |
| Aromatics | 24.7 |

| Distillation (D1160) | | |
|---|---|---|
| IBP | 401°F | (205°C) |
| 5% | 537 | (281°C) |
| 10% | 589 | (309°C) |
| 30% | 693 | (367°C) |
| 50% | 745 | (396°C) |
| 70% | 789 | (421°C) |
| 90% | 855 | (457°C) |
| 95% | 886 | (474°C) |
| EP% | 905 | (485°C) |

*Less Than

The alpha activity of the zeolite beta varied between 0.4 and 418, depending upon the following conditions:

| Catalyst No. | 1 | 2 | 3 | 4 | 5 |
|---|---|---|---|---|---|
| Catalyst Preparation | | | | | |
| Ratio, Zeolite Beta/Al$_2$O$_3$ | 50/50 | 50/50 | 65/35 | 50/50 | 50/50 |
| Steam Conditions | Unsteamed | | | | |
| Temperature, °F | -- | 1000 (538°C) | 1100 (593°C) | 1100 | 1300 (704°C) |
| Time, hrs. | -- | 16 | 70 | 70 | 9 |
| Pressure, psig | -- | 0 | 0 | 0 | 40 |
| Zeolite Alpha | 418 | 38 | 9 | 4 | 0.4 |

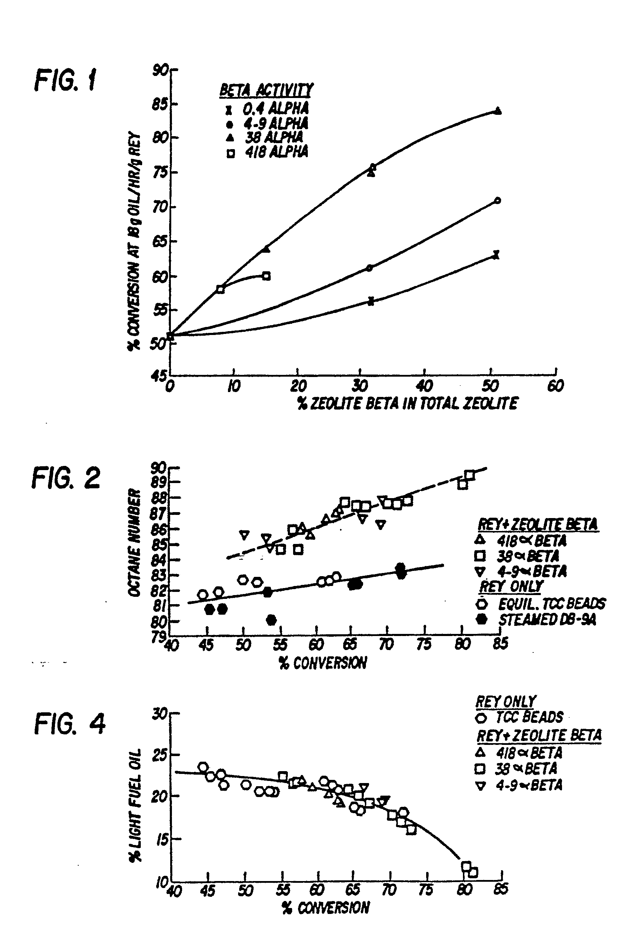

The results, as illustrated in Fig. 1, indicate a substantial activity gain over the standard commercial TCC catalyst beads (0 wt. % zeolite beta) with the addition of small amounts of zeolite beta. The catalysts comprising zeolite beta with alpha value greater than 38 show similar activity gains. Although the activity gain for catalysts comprising zeolite beta with an alpha value of 4 and 9 is smaller, the activity is still substantially improved over the standard catalyst.

Example 2

Example 2 demonstrates activity advantages with zeolite beta in fluid catalyst form. Gippsland gas oil was cracked in a fluid bed unit using zeolite REY, a physical mixture of zeolite beta and REY, and zeolite beta alone. The results are shown in Table 2.

## TABLE 2

| Catalyst | REY | 4:1 wt mixture Beta & REY | Beta |
|---|---|---|---|
| Temperature, °F (°C) | 932 (500) | 932 (500) | 941 (505) |
| LHSV (Based on Zeolite) | 0.50 | 0.58 | 0.50 |
| 420°F+ (216°C) Conversion (wt %) | 72 | 78 | 70 |
| Adjusted Temperature, °F (°C), for 70% Conv. at 0.5 LHSV | 924 (496) | 895 (479) | 941 (505) |

Example 3

Gippsland gas oil was cracked in a fluid bed unit. At 70% conversion of 420°F+ (215.5°C) fraction, the physical mixture catalyst of zeolite beta and REY gave 11% more gasoline and 1.8% more distillate than zeolite beta alone. In addition, C$_1$-C$_4$ gas yield was substantially less. The results are shown in Table 3.

7

EP 0 186 446 B1

## TABLE 3

Feed: Gippsland gas oil

Catalyst: (a) Steamed hydrogen form of zeolite beta (alpha value = 3.5 $SiO_2/Al_2O_3$ = 228)

(b) REY zeolite, 12 wt % in a silica-alumina binder

---

| Catalyst | zeolite beta (a) | 4:1 wt mixture (zeolite beta/REY) (a) + (b) |
|---|---|---|
| Yields (wt %) | | |
| $C_1 + C_2$ | 0.8 | 0.3 |
| $C_3 + C_4$ | 31.2 | 19.0 |
| Gasoline ($C_5$ – 420°F) | 36.8 | 48.4 |
| Distillate (420°–650°F) | 15.8 | 17.6 |
| Bottoms (650°F+) | 14.2 | 11.5 |
| Coke | 1.2 | 3.2 |
| 420°F+ Conversion (wt %) | 70 | 70 |
| Rx Temperature, °F (°C) | 941 (505) | 865 (463) |
| LHSV | 0.50 | 0.36 |

(420–650°F = 216–343°C)

Example 4

Gippsland gas oil was cracked over conventional REY and a 1:1 wt REY:zeolite beta physical mixture catalyst to achieve 46% conversion of 420°F+ fraction. The octane number of the gasoline is 3.4 RON higher with the mixture catalyst. The mixture catalyst also gave 2 wt. % more yield of gasoline + potential alkylate. The results are shown in Table 4.

8

## TABLE 4

Feed: Gippsland gas oil

Catalyst: (a) Steamed hydrogen form of Zeolite Beta (alpha value = 3.5

(b) Conventional REY zeolite, 12 wt % in a silica-alumina binder

| Catalyst | REY (b) alone | 1:1 wt mixture (Zeolite Beta/REY) (a) + (b) |
|---|---|---|
| Temperature, °F (°C) | 941 (505) | 941 (505) |
| LHSV* | 0.64 | 2.62 |
| 420°F$^+$/(216°C) Conversion (wt %) | 47.5 | 46.0 |
| Yields (wt %) | | |
| $C_1 + C_2$ | 0.49 | 0.35 |
| $C_3$ | 0.20 | 0.39 |
| $C_3^=$ | 3.04 | 4.31 |
| $i$-$C_4$ | 0.78 | 0.74 |
| $n$-$C_4$ | 0.10 | 0.25 |
| $C_4^=$ | 2.65 | 4.07 |
| Gasoline ($C_5$ - 420°F) | 40.27 | 35.96 |
| Distillate (420°-650°F) 216-343°C | 30.96 | 29.42 |
| Bottoms (650°F+) | 19.98 | 23.80 |
| Coke | 1.53 | 0.71 |
| Potential alkylate, % | 12.63 | 18.55 |
| Imported $iC_4$ | 6.16 | 9.43 |
| Gasoline + Alkylate, wt % | 52.9 | 54.5 |
| Clear RON, $C_5^+$ Gasoline | 84.0 | 87.4 |

\* LHSV based on a catalyst mixture containing 10 wt % of pure Zeolite Beta (100% Zeolite Beta) admixed with 90% Durabead 9A (which contains 12 wt % of REY)

### Examples 5-15

This set of experiments was conducted to evaluate zeolite beta as an additive catalyst cracking component for commercial TCC catalysts. Zeolite beta was extruded with 35 or 50 wt. % alumina binder and physically mixed with an equilibrated commercial TCC catalyst (Durabead 9A). Various quantities of zeolite beta, ranging from 0 to 10 wt. % of total catalyst weight, were added, and the alpha activity of the zeolite beta was varied between 4 and 418. The Gippsland gas oil, as disclosed in Examples 1-4, was processed over the catalysts. The process conditions and results are listed below in Table 5.

## TABLE 5

| Example | 5 | 6 | 7 | 8 | 9 |
|---|---|---|---|---|---|
| **Operating Conditions** | | | | | |
| Wtd. Ave. Reactor Temp. °F | 863(462°C) | 875(468°C) | 875(468°C) | 876(469°C) | 872(476°C) |
| LHSV | 3.0 | 2.3 | 1.5 | 2.3 | 2.3 |
| Catalyst/Oil, Wt | 2.1 | 2.7 | 4.2 | 2.7 | 2.7 |
| **Product Yields** | | | | | |
| Vol % Conversion | 46.70 | 51.75 | 62.84 | 57.87 | 63.38 |
| Vol % Vac Dist Bottoms | 30.69 | 27.43 | 16.25 | 20.00 | 17.11 |
| Vol % Light Fuel Oil | 22.61 | 20.83 | 20.91 | 22.12 | 19.52 |
| Vol % $C_5^+$ Gasoline | 40.48 | 43.70 | 50.56 | 45.72 | 45.29 |
| Vol % $C_4$'s (Total) | 8.49 | 10.96 | 13.66 | 14.60 | 19.33 |
| Wt % Dry Gas ($C_3^-$) | 2.87 | 3.85 | 5.17 | 5.10 | 7.43 |
| Wt % Coke | 1.48 | 1.95 | 3.01 | 2.35 | 2.94 |
| **Alkylation Yields** | | | | | |
| Vol % Alkylate | 11.07 | 13.61 | 15.53 | 18.78 | 26.17 |
| Vol % Addn $iC_4$ to Alky | 3.57 | 3.77 | 3.23 | 5.70 | 8.64 |
| Vol % $C_5^+$ Gaso + Alky | 51.55 | 57.31 | 66.09 | 64.50 | 71.46 |
| **Product Specs** | | | | | |
| Octane R + O $C_5^+$ Gaso | 81.8 | 82.5 | 82.8 | 86.0 | 87.4 |
| Octane R + O $C_5^+$ Gaso + Alky | 84.5 | 85.3 | 85.4 | 88.4 | 89.9 |
| Raw Gaso Octane M + O | -- | 74.0 | -- | 77.3 | -- |
| $C_5^+$ Gaso Density at 60°F(15,5°C) | 0.7396 | 0.7629 | 0.7386 | 0.7285 | 0.7125 |
| LFO Density at 60°F | 0.8772 | 0.8817 | 0.8915 | 0.8865 | 0.8926 |
| **Catalyst** | | | | | |
| % Zeolite Beta (in catalyst) | 0 | 0 | 0 | 1 | 2 |
| Alpha Activity (Zeolite Beta) | -- | -- | -- | 418 | 418 |
| Beta:Y, Wt | 0:1 | 0:1 | 0:1 | 0.9:10 | 1.7:10 |
| Beta in Total Zeolite, % | 0 | 0 | 0 | 7.84 | 14.79 |
| Zeolite in Catalyst, % | 12 | 12 | 12 | 12.76 | 13.52 |
| WHSV (G Oil/G Zeolite) | 23.75 | 18.17 | 11.83 | 17.08 | 16.12 |
| CAT-D (Y Activity)* | 52 | 52 | 52 | 52 | 52 |

* CAT-D activity is a test at standard conditions used to quantify the cracking activity of TCC catalyst bead. The CAT-D activity refers to the volume percent conversion of Mid-Continent Pipe Line Gas Oil (MCPLGO) in a fixed bed reactor at 875°F, 2.3 LHSV, 2.6 C/O (v/v), and 10 minutes run time.

## TABLE 5 (Cont)

| Example | 10 | 11 | 12 | 13 |
|---|---|---|---|---|
| Operating Conditions | | | | |
|   Wtd. Ave. Reactor Temp. °F | 861 (461°C) | 859 (459°C) | 862 (461°C) | 863 (462°C) |
|   LHSV | 2.3 | 2.3 | 3.0 | 3.0 |
|   Catalyst/Oil, Wt | 2.7 | 2.7 | 2.1 | 2.1 |
| Product Yields | | | | |
|   Vol % Conversion | 72.83 | 81.21 | 64.33 | 56.79 |
|   Vol % Vac Dist Bottoms | 10.92 | 7.44 | 14.73 | 21.51 |
|   Vol % Light Fuel Oil | 16.20 | 11.36 | 20.94 | 21.69 |
|   Vol % $C_5^+$ Gasoline | 51.48 | 48.14 | 46.92 | 45.86 |
|   Vol % $C_4$'s (Total) | 23.89 | 26.42 | 19.72 | 14.99 |
|   Wt % Dry Gas ($C_3^-$) | 7.43 | 14.30 | 6.18 | 4.41 |
|   Wt % Coke | 3.35 | 4.83 | 2.71 | 2.10 |
| Alkylation Yields | | | | |
|   Vol % Alkylate | 31.22 | 43.47 | 27.83 | 19.80 |
|   Vol % Addn i$C_4$ to Alky | 9.80 | 16.03 | 10.11 | 6.62 |
|   Vol % $C_5^+$ Gaso + Alky | 82.70 | 91.60 | 74.75 | 65.66 |
| Product Specs | | | | |
|   Octane R + O $C_5^+$ Gaso | 87.8 | 89.5 | 87.8 | 86.0 |
|   Octane R + O $C_5^+$ Gaso + Alky | 90.3 | 91.5 | 90.2 | 88.5 |
|   Raw Gaso Octane M + O | 76.7 | -- | 76.9 | -- |
|   $C_5^+$ Gaso Density at 60°F | 0.7222 | 0.7325 | 0.7191 | 0.7328 |
|   LFO Density at 60°F (15.5°C) | 0.9041 | 0.9512 | 0.8941 | 0.8830 |
| Catalyst | | | | |
|   % Zeolite Beta (in catalyst) | 5 | 10 | 5 | 2 |
|   Alpha Activity (Zeolite Beta) | 38 | 38 | 38 | 38 |
|   Beta:Y, Wt | 4.6:10 | 1.04:1 | 4.6:10 | 1.7:10 |
|   Beta in Total Zeolite, % | 31.65 | 51.02 | 31.65 | 14.8 |
|   Zeolite in Catalyst, % | 15.8 | 19.6 | 15.8 | 13.52 |
|   WHSV (G Oil/G Zeolite) | 13.8 | 11.12 | 18.04 | 21.1 |
|   CAT-D (Y Activity) | 52 | 52 | 52 | 52 |

## TABLE 5 (Cont)

| Example | 14 | 15 |
|---|---|---|
| **Operating Conditions** | | |
| Wtd. Ave. Reactor Temp. °F | 859 (459°C) | 875 (468°C) |
| LHSV | 3.0 | 2.3 |
| Catalyst/Oil, Wt | 2.1 | 2.7 |
| **Product Yields** | | |
| Vol % Conversion | 53.09 | 69.44 |
| Vol % Vac Dist Bottoms | -- | 11.19 |
| Vol % Light Fuel Oil | -- | 19.37 |
| Vol % $C_5^+$ Gasoline | 43.39 | 52.51 |
| Vol % $C_4$'s (Total) | 12.36 | 19.06 |
| Wt % Dry Gas ($C_3^-$) | 3.74 | 7.00 |
| Wt % Coke | 2.19 | 2.85 |
| **Alkylation Yields** | | |
| Vol % Alkylate | 16.67 | 28.00 |
| Vol % Addn i$C_4$ to Alky | 5.87 | 10.84 |
| Vol % $C_5^+$ Gaso + Alky | 60.06 | 80.50 |
| **Product Specs** | | |
| Octane R + O $C_5^+$ Gaso | 85.4 | 87.8 |
| Octane R + O $C_5^+$ Gaso + Alky | 87.9 | 90.0 |
| Raw Gaso Octane M + O | 76.7 | 76.6 |
| $C_5^+$ Gaso Density at 60°F | 0.7357 | 0.7215 |
| LFO Density at 60°F (15.5°C) | 0.8791 | 0.8943 |
| **Catalyst** | | |
| % Zeolite Beta (in catalyst) | 5 | 10 |
| Alpha Activity (Zeolite Beta) | 9 | 4 |
| Beta:Y, Wt | 4.5:10 | 1.04:1 |
| Beta in Total Zeolite, % | 31.1 | 51.0 |
| Zeolite in Catalyst, % | 16.08 | 19.60 |
| WHSV (G Oil/G Zeolite) | 17.7 | 11.12 |
| CAT-D (Y Activity) | 52 | 52 |

The results, as illustrated in Fig. 2, show the octane number of the product gasoline for various conversion levels of the feedstock, relative zeolite loadings and the alpha activity of the zeolite beta in the catalyst. For example, the increase in octane number obtained is 3-5 at 65% conversion. This represents a marked distinction from conventional TCC catalysts, which show little effect of conversion on gasoline octane number except at very high conversions, i.e., greater than 75%, where over-cracking generally occurs. Even at that point the response is slight, as can be seen in Fig. 2.

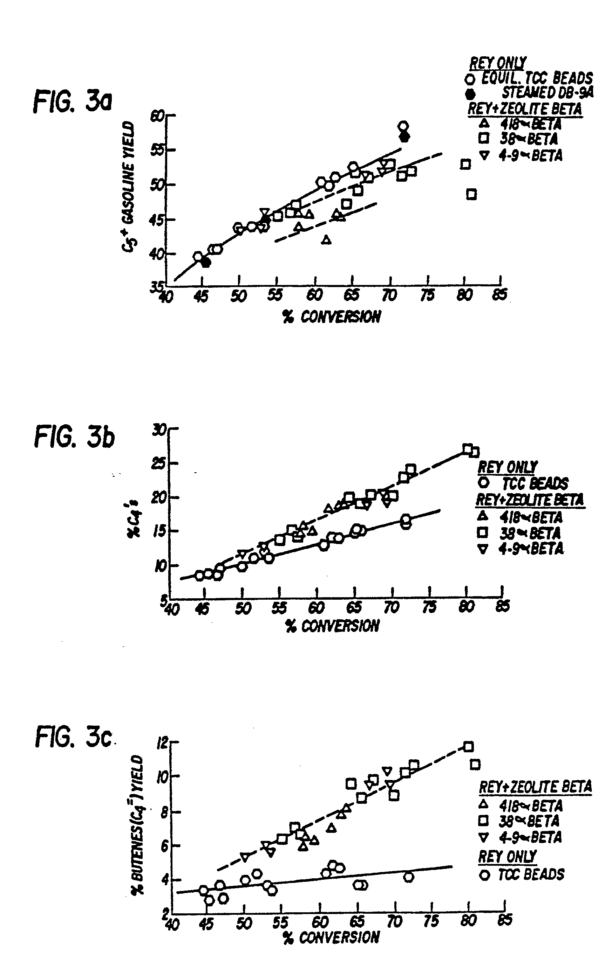

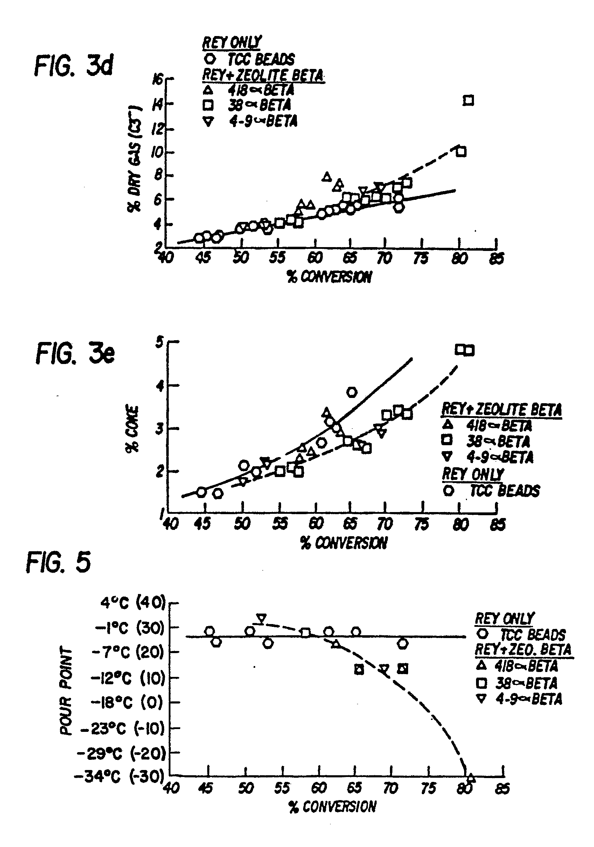

Figs. 3a-3e illustrate the relationship between the activity (% conversion) of the catalysts of the present invention and the product yields for gasoline, $C_4$ products, butenes ($C_4$ =), dry gas ($C_3$-) makes and coke. It can be seen that coke make for the catalysts containing zeolite beta are slightly reduced. The dry gas makes and $C_4$ products are slightly increased for catalysts containing zeolite beta. It should be noted that the $C_4$ products produced with a zeolite beta-containing catalyst are high in $C_4$ olefins and can be used in an alkylation unit to produce more gasoline. Further, the incremental dry gas produced is high in $C_3$ olefins, which can also be used for alkylation. The $C_4$ and dry gas makes are higher for the catalysts with zeolite beta having an alpha value of 418 then those with lower alpha values. The gasoline yields are only slightly reduced for zeolite beta-containing catalysts with alpha values less than 38. The zeolite beta-containing catalysts with alpha values of 418 exhibit larger gasoline yield loss, which accounts for the increased $C_4$ and dry gas make yields.

Fig. 4 illustrates that the yield of Light Fuel Oil (LFO), i.e., those product oils having a boiling point between 420°F (216°C) and 690°F (366°C), is essentially the same whether or not zeolite beta is added to the conventional TCC catalyst. It can be assumed that the same results would apply to heavy fuel oils, i.e., those product oils having a boiling point higher than 690°F (366°C).

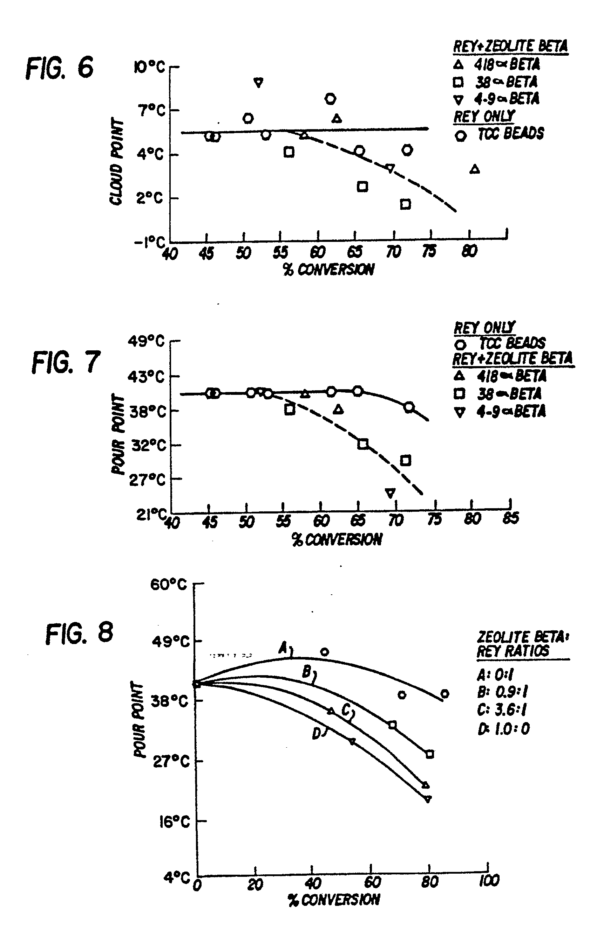

Figs. 5-7 illustrate the relationship between pour point and catalyst activity for LFO (Fig. 5), cloud point and catalyst activity for LFO (Fig.6), and pour point and catalyst activity for vacuum distillate bottoms (VDB) (Fig.7). In all three figures, advantages can be seen for the addition of zeolite beta to the conversion catalyst at conversion levels greater than about 60%.

Example 16

Example 16 illustrates the effect of a composite catalyst comprising zeolite beta and REY. The previous examples were directed to physical mixtures of zeolite beta and REY. Six wt. % zeolite beta was composited with 6 wt. % REY, formed into a bead-shaped catalyst using silica-alumina as a binder, and steamed at 1290°F (699°C) at 1 atm (1 bar) pressure for 12 hours. Gippsland gas oil was cracked in a fixed bed at 925°F (496°6) for 5 minutes over the composite catalyst. The results of the composite catalyst run, as well as a comparison run utilizing a fresh commercial sample of REY (Durabead 9A) catalyst, are shown in Table 6.

## TABLE 6

| | Durabead 9A® | Beta/REY |
|---|---|---|
| Cat/Oil (g/g) | 2.3 | 2.2 |
| Beta (%)/REY (%) | 0/12 | 6/6 |
| Conversion, Vol % | 65 | 65 |
| $C_5^+$ Gasoline, Vol % | 50.5 | 47.1 |
| Total $C_4$'s, Vol % | 14.0 | 17.2 |
| Dry Gas, Wt % | 6.2 | 7.6 |
| Coke, Wt % | 3.1 | 3.3 |
| RON, $C_5^+$ Gaso | 83.5 | 86.9 |
| $\Delta$RON/ $\Delta$Yield | -- | 1.0 |
| $C_5^+$ Gaso, °API/g per cm$^3$ | 57.4/0.749 | 62.3/0.730 |
| $C_5^+$ Gaso + Alky, Vol % | 66.5 | 69.7 |
| RON, $C_5^+$ Gaso + Alky | 86.0 | 89.2 |
| Iso-$C_4$ Shortfall, Vol % | 4.0 | 7.4 |
| Alkylate, Vol % | 16.0 | 22.6 |
| $C_3^=$, Vol % | 4.5 | 6.3 |
| $C_4^=$, Vol % | 4.9 | 7.4 |
| Iso-$C_4$, Vol % | 7.2 | 8.0 |
| LFO, Wt % | 21.7 | 22.3 |
| HFO, Wt % | 15.4 | 15.0 |
| LFO, °API/g per cm$^3$ | 23.1 /0.915 | 27.6/0.889 |
| HFO, °API/g per cm$^3$ | 26.2 /0.897 | 18.4/0.944 |

The results from Table 6 indicate that the zeolite beta/REY catalyst yields an equivalent conversion to REY alone at lower catalyst/oil ratios. Also, the zeolite beta/REY composite catalyst improved $C_5$ + gasoline research octane number (RON), gasoline and alkylate yield and resulted in a higher $C_4 = /C_3 =$ ratio in olefins for potential alkylation, which translates into higher quality alkylates.

Example 17

Example 17 illustrates that higher research octane number benefits can be obtained with a composite zeolite beta/REY catalyst than with a separate particle mixture when using large TCC bead catalysts, which suffer from diffusional effects. Both catalysts were steamed (100% steam) at 1300° F (704° 6), 40 psig (3.8 bar) for 9 hours. Gippsland gas oil was cracked over the catalyst in the same manner as in Example 16. The results are presented below in Table 7.

## TABLE 7

|  | Separate | Composite |
|---|---|---|
| Beta (%)/REY (%) | 10/10 | 6/6 |
| Conversion, Vol % | 62.5 | 65 |
|  | $\Delta$'s* | $\Delta$'s |
| $C_5^+$ Gasoline, Vol % | -0.6 | -2.2 |
| Total $C_4$'s, Vol % | +0.9 | +0.3 |
| Dry Gas, Wt % | +1.0 | +0.8 |
| Coke, Wt % | +1.0 | +0.1 |
| RON, $C_5^+$ Gaso | +1.0 | +3.3 |

* $\Delta$'s referenced to base case REY examples at respective conversion levels

Example 18

Example 18 illustrates the effect of processing a non-waxy feed (TCC Feedstock, properties listed in Table 8 following) over a zeolite beta/REY catalyst and a comparison REY only catalyst.

## TABLE 8

### Non-Waxy TCC Feedstock Properties

| | |
|---|---|
| API Gravity /g per cm³ | 22.0/0.922 |
| Pour Point, °F | 85 (29.5°C) |
| Conradson Carbon, Wt % | 0.50 |
| Kin. Viscosity at 100°C, cs | 7.21 |
| Aniline Point, °F | 168 (75.5°C) |
| Bromine Number | 8.6 |
| Refractive Index at 70°C | 1.49 |
| Sulfur, Wt % | 1.75 |
| Nitrogen, ppm | 1600 |
| Nickel, ppm | 0.15 |
| Vanadium, ppm | 0.95 |
| Iron, ppm | 3.6 |
| Copper, ppm | *0.1 |
| Paraffins, Wt % | 18.7 |
| Mono Naphthenes | 9.5 |
| Poly Naphthenes | 15.4 |
| Aromatics | 56.6 |

* Less Than

The catalyst was prepared in the same manner as the catalyst of Example 16. The feedstock was passed over the catalyst in the same manner as in Example 16. The results are listed below in Table 9.

## TABLE 9

| | Durabead 9A ® | Beta/REY |
|---|---|---|
| Cat/Oil (g/g) | 1.9 | 2.2 |
| Beta (%)/REY (%) | 0/12 | 6/6 |
| Conversion, Vol % | 50 | 50 |
| $C_5^+$ Gasoline, Vol % | 41.5 | 39.0 |
| Total $C_4$'s, Vol % | 8.5 | 9.4 |
| Dry Gas, Wt % | 5.3 | 6.0 |
| Coke, Wt % | 3.3 | 3.8 |
| RON, $C_5^+$ Gaso | 86.6 | 87.8 |
| $\Delta$ RON/$\Delta$ Yield | -- | 0.48 |
| $C_5^+$ Gaso, °API/g per cm³ | 54.3/0.762 | 52.7/0.768 |
| $C_5^+$ Gaso + Alky, Vol % | 52.8 | 53.2 |
| RON, $C_5^+$ Gaso + Alky | 88.2 | 89.3 |
| iso-$C_4$ Shortfall, Vol % | 3.7 | 5.5 |
| Alkylate, Vol % | 11.3 | 14.2 |
| $C_3^=$, Vol % | 3.8 | 4.7 |
| $C_4^=$, Vol % | 3.1 | 4.0 |
| iso-$C_4$, Vol % | 4.1 | 4.3 |
| LFO, 450°-650°F, vol % 232-343°C | 21.2 | 21.5 |
| HFO, 650°F$^+$, Vol % | 28.8 | 28.5 |
| LFO, °API/g per cm³ | 17.8/0.948 | 19.4/0.938 |
| HFO, °API/g per cm³ | 17.3/0.951 | 15.8/0.961 |

Example 19

Gippsland gas oil was cracked in a fluid bed FCC unit with various mixtures of hydrogen form of zeolite beta and a conventional REY catalyst. Table 10 shows the pour points of the 420°F+ (215.5°C) product at 50% conversion of 420°F+ feed.

## TABLE 10

Feed:      Gippsland 400°-1000°F gas oil (204-538°C)

Catalyst:   (a) Hydrogen form of steamed beta, steamed for 24 hours at 100% steam, 1200°F (649°C) and 14.7 psig (2 bar) pressure

           (b) REY zeolite, 12 wt. % in a silica-alumina binder

| Wt Ratio of zeolite beta : Y | Pour Point * °F (°C) |
|---|---|
| 0 : 1 | 90 (32) |
| 0.93 : 1 | 75 (23.9) |
| 3.6 : 1 | 70 (21) |
| 1 : 0 | 65 (18.3) |

\* At a 420°F+ (215.5°C) Conversion of 50 wt. %.

The change in the pour points of 600°F+ (316°C) product fraction as a function of 650°F+ (343°C) conversion is shown in Fig. 8. The figure clearly shows the benefits for backend pour point reduction with increasing levels of zeolite beta. Increases in 600°F+ pour point observed with REY alone are absent in the presence of zeolite beta.

### Example 20

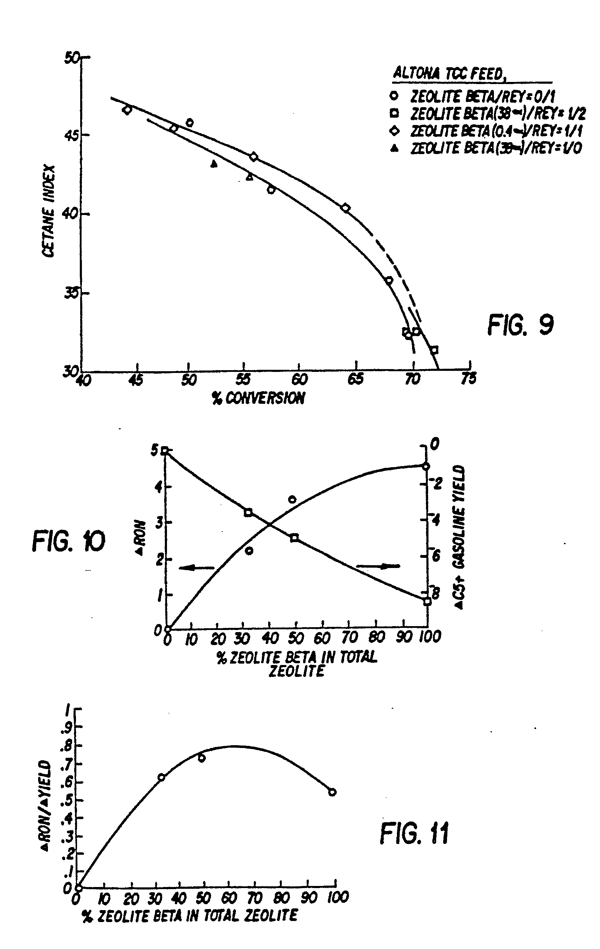

Gippsland gas oil was cracked in a fixed bed at 925°F (496°C) over various zeolites. The LFO distillates were obtained by vacuum distillation of total liquid products. The distillates from mixture catalyst experiments showed better cetane quality than those from REY. The distillates from beta catalyst alone were of similar cetane quality to REY. The results are shown in Table 11 and Fig. 9.

18

## TABLE 11

| Catalyst | Feed Conversion Vol. % | LFO (450°-690°F) Distillate (232°-366°C) | |
| | | Yield, Vol. % | Cetane Index |
|---|---|---|---|
| REY alone | 50.1 | 25.5 | 45.8 |
| | 57.6 | 21.1 | 41.4 |
| | 67.9 | 17.9 | 35.7 |
| | 69.6 | 17.3 | 32.3 |
| Beta (alpha = 38)/REY 1/2 | 69.3 | 17.3 | 32.5 |
| | 70.2 | 17.7 | 32.5 |
| | 71.9 | 16.9 | 31.3 |
| Beta (alpha = 0.4)/REY 1/1 | 44.1 | 26.0 | 46.7 |
| | 48.5 | 25.6 | 45.5 |
| | 55.9 | 23.3 | 43.5 |
| | 64.1 | 21.6 | 40.3 |
| Beta (alpha = 38) alone | 52.3 | 21.3 | 43.1 |
| | 55.5 | 22.3 | 42.3 |

Examples 21-24

Examples 21-24 illustrate the effect of varying ratios of REY/zeolite beta on the octane number when cracking Gippsland gas oil feedstock. REY was contained in standard TCC catalyst beads consisting of 12% zeolite in a silica-alumina binder. Zeolite beta was steamed at 1000°F (538°C), 1 atm (bar) pressure for about 16 hours and extruded with 50 wt. % alumina binder. Experiments were conducted in fixed-bed cracking units using physical mixtures of the two components. The process conditions and results are shown below in Table 12.

19

## TABLE 12

| Example | 21 | 22 | 23 | 24 |
|---|---|---|---|---|
| Catalysts | | | | |
| REY CAT-D Activity | 52.2 | 52.2 | 52.2 | -- |
| Zeolite Beta (alpha activity) | -- | 38 | 38 | 38 |
| REY/Zeolite Beta | 1:0 | 2:1 | 1:1 | 0:1 |
| Reaction Conditions | | | | |
| Temperature, °F (°C) | 925 (496) | 925 | 925 | 925 |
| Time-on-Stream, min | 5 | 5 | 5 | 5 |
| Zeolite/Oil, Wt | | | | |
| Total Zeolite/Wt oil | 0.49 | 0.30 | 0.26 | 0.21 |
| Conversion, Vol % | 60 | 60 | 60 | 60 |
| $C_5^+$ Gaso, Vol % | 45.5 | 42.0 | 40.6 | 37.0 |
| Total $C_4$'s, Vol % | 13.0 | 17.5 | 18.9 | 20.7 |
| Dry Gas, Wt % | 6.5 | 6.8 | 7.9 | 9.4 |
| Coke, Wt % | 2.5 | 2.45 | 2.45 | 2.2 |
| RON, $C_5^+$ Gaso | 86.0 | 88.2 | 89.6 | 90.5 |
| ΔRON/ ΔYield | -- | 0.63 | 0.73 | 0.53 |
| $C_5^+$ Gaso + Alky, Vol % | 64.0 | 67.5 | 73.0 | 75.0 |
| RON, $C_5^+$ Gaso + Alky | 88.4 | 90.7 | 92.0 | 92.1 |
| iso-$C_4$ Shortfall, Vol % | 6.0 | 10.0 | 14.9 | 19.0 |
| $C_3^=$, Vol % | 5.3 | 6.4 | 9.0 | 10.8 |
| $C_4^=$, Vol % | 5.3 | 9.0 | 10.4 | 12.0 |
| iso-$C_4$, Vol % | 6.2 | 7.1 | 7.0 | 6.8 |
| LFO, Vol % | 22.4 | 20.0 | 18.0 | 20.6 |
| HFO, Vol % | 17.6 | 20.0 | 22.0 | 19.4 |
| LFO Pour, °F (°C) | 30 (-1.1) | 30 | 25 (-3.9) | 25 |
| HFO Pour, °F (°C) | 105 (41) | 100 (38) | 95 (35) | 95 |

The data from Table 12 show that the Y zeolite alone produced about 8.5 vol % more gasoline, but at a 4.5 lower clear research octane number than zeolite beta alone. Fig. 10 shows all the data, including the intermediate (mixture) cases. Here

Δ O =    Octane with Zeolite Beta Present - Octane with Zeolite Y Alone

Δ Y =    Gasoline Yield with Zeolite Beta Present - Gasoline Yield with Zeolite Y Alone

(ΔO/ΔY) is the absolute value of the ratio of the two. As shown, ΔO increases monotonically with increasing beta loadings. Similarly, ΔY decreases monotonically with increased beta loadings.

Fig. 10 clearly illustrates the effects of changing the zeolite beta:Y ratio. The gasoline octane number is a function of the level of zeolite beta added. Cracking with the zeolite beta alone gives 90.5 octane (R + O) gasoline, compared to 86 R + O for the Y alone. On the other hand, gasoline yields follow the opposite trend, and the largest yield loss coincides with the largest octane gain.

Presenting the ΔO and ΔY values in Fig. 10 as a ratio (ΔO/ΔY), as a function of percent zeolite beta gives the data shown in Fig. 11. This figure emphasizes the discussion above. The ratio of the two curves (ΔO/ΔY) shows a maximum near the 50% loading level. This is only a coincidence and a function of the conversion level and the two zeolites' relative activities. Note, the ($\Delta O/\Delta Y$) curve is higher than would be expected by a linear blending (based on the catalyst loading) of the two extreme cases.

The efficiency of gaining octane may be considered in terms of:

$$\frac{\Delta O}{\Delta Y} = \frac{\text{octane gain}}{\text{gasoline yield loss}}$$

which is shown in Fig. 11 and appears to reach a maximum near 1:1 ratios of beta:Y.

Although the invention has been described in conjunction with a specific embodiment, it is evident that many alternatives and variations will be apparent to those skilled in the art in light of the foregoing description. Accordingly, the invention is intended to embrace all of the alternatives and variations that fall within the spirit and scope of the appended claims.

## Claims

1. A process for cracking a hydrocarbon feed which comprises contacting said feed at a temperature of 449 to 566°C in the absence of added hydrogen with a catalyst comprising zeolite beta and a zeolite having the structure of faujasite, the weight ratio of faujasite to beta being from 1:25 to 20:1.

2. A process according to claim 1 wherein the weight ratio of faujasite to beta is from 1:4 to 5:1.

3. A process according to any preceding claim wherein the faujasite is zeolite Y.

4. A process according to claim 3 wherein the zeolite is rare earth-exchanged zeolite Y, ultrastable zeolite Y or the acid form of zeolite Y.

5. A process according to any of claims 1 to 4 wherein the catalyst is in the form of particles which contain both zeolite beta and the faujasite.

6. A process according to any of claims 1 to 4 wherein the catalyst is in the form of particles which contain either zeolite beta or faujasite.

7. A process according to any preceding claim wherein the zeolite beta is in the acid or rare earth form.

8. A process according to any preceding claim wherein the zeolite beta has a silica:alumina mole ratio of 10 to 500.

9. A process according to any preceding claim wherein the zeolite beta has a silica:alumina mole ratio of 50 to 250.

10. A process according to any preceding claim wherein the catalyst further comprises a porous matrix.

11. A process according to claim 10 wherein the matrix comprises alumina, silica and/or silica-alumina.

12. A process according to any preceding claim wherein said contacting is conducted at a pressure of about 0 (1 bar) to about 100 psig (7.9 bar) and a LHSV of about 0.1 to about 20.

13. A process according to any preceding claim wherein the zeolite beta has an alpha value less than 100.

14. A process according to any preceding claim wherein the weight ratio of beta to faujasite is from 40:60 to 70:30.

15. A process according to any preceding claim wherein said feed is a gas oil.

16. A process according to claim 15 wherein said gas oil has an initial boiling point of at least 400° F (204.5° C) and an end point of at least 850° F (454.5° C).

17. A process according to claim 15 or claim 16 wherein said gas oil has an initial boiling point of about 400° F (204.5° C) and an end point of about 1000° F (538° C).

18. A process according to any preceding claim wherein said contacting takes place in a fluidized catalytic cracking unit.

19. A process according to any of claims 1 to 17 wherein said contacting takes place in a moving bed catalytic cracking unit.

20. A process according to any preceding claim wherein the weight ratio of faujasite to beta is from 1:2 to 2:1.

21. A process according to any preceding claim wherein the weight ratio of faujasite to beta is 1:1.


**Revendications**

1. Un procédé de craquage d'une charge d'hydrocarbures consistant à mettre en contact ladite charge à une température de l'ordre de 449 à 566° C en l'absence d'addition d'hydrogène avec un catalyseur à base d'une zéolite béta et d'une zéolite présentant une structure de type faujasite, le rapport pondéral de la faujasite à la zéolite béta étant de 1/25 à 20/1.

2. Un procédé selon la revendication 1, dans lequel le rapport pondéral de la faujasite à la zéolite béta est de 1/4 à 5/1.

3. Un procédé selon l'une quelconque des revendications précédentes, dans lequel la faujasite est la zéolite Y.

4. Un procédé selon la revendication 3, dans lequel la zéolite est une zéolite Y échangée avec une terre rare, une zéolite Y ultrastable ou la forme acide de la zéolite Y.

5. Un procédé selon l'une quelconque des revendications 1 à 4, dans lequel le catalyseur est présent sous forme de particules contenant à la fois la zéolite béta et la faujasite.

6. Un procédé selon l'une quelconque des revendications 1 à 4, dans lequel le catalyseur se présente sous forme de particules contenant soit la zéolite béta, soit la faujasite.

7. Un procédé selon l'une quelconque des revendications précédentes, dans lequel la zéolite béta se présente soit sous forme acide, soit sous forme échangée avec une terre rare.

8. Un procédé selon l'une quelconque des revendications précédentes, dans lequel la zéolite béta a un rapport molaire silice/alumine de l'ordre de 10 à 500.

9. Un procédé selon l'une quelconque des revendications précédentes, dans lequel la zéolite béta a un rapport molaire silice/alumine de 50 à 250.

10. Un procédé selon l'une quelconque des revendications précédentes, dans lequel le catalyseur inclut de plus une matrice poreuse.

11. Un procédé selon la revendication 10, dans lequel la matrice consiste en alumine, silice et/ou silice-alumine.

12. Un procédé selon l'une quelconque des revendications précédentes, dans lequel ledit contact est mis en oeuvre à une pression d'environ 0 à environ 100 psig (1 bar à 7,9 bars) et à une vitesse spatiale horaire pondérale d'environ 0,1 à environ 20.

13. Un procédé selon l'une quelconque des revendications précédentes, dans lequel la zéolite béta a une valeur alpha inférieure à 100.

14. Un procédé selon l'une quelconque des revendications précédentes, dans lequel le rapport pondéral de la zéolite béta à la faujasite est de l'ordre de 40/60 à 70/30.

15. Un procédé selon l'une quelconque des revendications précédentes, dans lequel ladite charge est un gasoil.

16. Un procédé selon la revendication 15, dans lequel ledit gasoil a un point d'ébullition initial d'au moins 204,5° C (400° F) et un point d'ébullition final d'au moins 454,5° C (850° F).

17. Un procédé selon la revendication 15 ou la revendication 16, dans lequel ledit gasoil a un point d'ébullition initial d'environ 204,5° C (400° F) et un point d'ébullition final d'environ 538° C (1 000° F).

18. Un procédé selon l'une quelconque des revendications précédentes, dans lequel ledit contact est mis en oeuvre dans une unité de craquage catalytique à lit fluidisé.

19. Un procédé selon l'une quelconque des revendications 1 à 17, dans lequel ledit contact est mis en oeuvre dans une unité de craquage catalytique à lit mobile.

20. Un procédé selon l'une quelconque des revendications précédentes, dans lequel le rapport pondéral de la faujasite à la zéolite béta est de l'ordre de 1/2 à 2/1.

21. Un procédé selon l'une quelconque des revendications précédentes, dans lequel le rapport pondéral de la faujasite à la zéolite béta est de 1/1.

## Ansprüche

1. Verfahren zum Cracken einer Kohlenwasserstoffzufuhr, das den Kontakt dieser Zufuhr bei einer Temperatur von 449 bis 556° C in Abwesenheit von zugesetztem Wasserstoff mit einem Katalysator umfaßt, der Zeolith Beta und einen Zeolith umfaßt, der die Struktur von Faujasit aufweist, wobei das Gewichtsverhältnis von Faujasit zum Zeolith Beta von 1:25 bis 20:i beträgt.

2. Verfahren nach Anspruch 1 , worin das Gewichtsverhältnis des Faujasit zum Zeolith Beta von 1:4 bis 5:1 beträgt.

3. Verfahren nach einem der vorstehenden Ansprüche, worin das Faujasit Zeolith Y ist.

4. Verfahren nach Anspruch 3, worin der Zeolith ein mit Seltenen Erden ausgetauschter Zeolith Y, ultrastabiler Zeolith Y oder die Säureform von Zeolith Y ist.

5. Verfahren nach einem der Ansprüche 1 bis 4, worin der Katalysator in Form von Partikeln vorliegt, die sowohl Zeolith Beta als auch Faujasit enhalten.

6. Verfahren nach einem der Ansprüche 1 bis 4, worin der Katalysator in Form von Partikeln vorliegt, die entweder Zeolith Beta oder Faujasit enthalten.

7. Verfahren nach einem der vorstehenden Ansprüche, worin der Zeolith Beta in der Säureform oder in der Form der Seltenen Erden vorliegt.

8. Verfahren nach einem der vorstehenden Ansprüche, worin der Zeolith Beta ein Siliciumdioxid/Aluminiumoxid-Mol-verhältnis von 10 bis 500 aufweist.

9. Verfahren nach einem der vorstehenden Ansprüche, worin der Zeolith Beta ein Siliciumdioxid/Aluminumoxid-Mol-verhältnis von 50 bis 250 aufweist.

**10.** Verfahren nach einem der vorstehenden Ansprüche, worin der Katalysator außerdem eine poröse Matrix umfaßt.

**11.** Verfahren nach Anspruch 10, worin die Matrix Aluminiumoxid, Siliciumdioxid und/oder Siliciumdioxid-Aluminiumoxid umfaßt.

**12.** Verfahren nach einem der vorstehenden Ansprüche, worin der Kontakt bei einem Druck von etwa 0 (1 bar) bis etwa 100 psig (7,9 bar) und einer LHSV von etwa 0,1 bis etwa 20 durchgeführt wird.

**13.** Verfahren nach einem der vorstehenden Ansprüche, worin der Zeolith Beta einen Alpha-Wert von kleiner als 100 aufweist.

**14.** Verfahren nach einem der vorstehenden Ansprüche, worin das Gewichtsverhältnis von Zeolith Beta zum Faujasit von 40:60 bis 70:30 beträgt.

**15.** Verfahren nach einem der vorstehenden Ansprüche, worin die Zufuhr Gasöl ist.

**16.** Verfahren nach Anspruch 15, worin das Gasöl einen Anfangssiedepunkt von mindestens 400° F (204,5° C) und einen Endpunkt von mindestens 850° F (454,5° C) aufweist.

**17.** Verfahren nach Anspruch 15 oder Anspruch 16, worin das Gasöl einen Anfangssiedepunkt von etwa 400° F (204,5° C) und einen Endpunkt von etwa 1000° C (538° C) aufweist.

**18.** Verfahren nach einem der vorstehenden Ansprüche, worin der Kontakt in einer katalytischen Wirbelschicht-Crackanlage stattfindet.

**19.** Verfahren nach einem der Ansprüche 1 bis 17, worin der Kontakt in einer katalytischen Bewegtbett-Crackanlage stattfindet.

**20.** Verfahren nach einem der vorstehenden Ansprüche, worin das Gewichtsverhältnis von Faujasit zum Zeolith Beta von 1:2 bis 2:1 beträgt.

**21.** Verfahren nach einem der vorstehenden Ansprüche, worin das Gewichtsverhältnis von Faujasit zum Zeolith Beta 1:1 beträgt.

EP 0 186 446 B1

FIG. 1

FIG. 2

FIG. 4

25

FIG. 3a

FIG. 3b

FIG. 3c

FIG. 3d

FIG. 3e

FIG. 5

27

FIG. 6

FIG. 7

FIG. 8

ALTONA TCC FEED,
- ○ ZEOLITE BETA/REY = 0/1
- □ ZEOLITE BETA(38~)/REY = 1/2
- ◇ ZEOLITE BETA(0.4~)/REY = 1/1
- ▲ ZEOLITE BETA(38~)/REY = 1/0

FIG. 9

FIG. 10

FIG. 11